# EUROPEAN PATENT APPLICATION

(11) **EP 4 538 106 A1**
(43) Date of publication of application: **16.04.2025**
(21) Application number: 23834467.5
(22) Date of filing: 21.04.2023
(51) Int. Cl.: B60L 53/22

(54) **BIDIRECTIONAL ON-BOARD CHARGER, ON-BOARD POWER SYSTEM, AND ELECTRIC VEHICLE**

(30) Priority: 05.07.2022 CN 202210782895
(71) Applicant: Huawei Digital Power Technologies Co., Ltd., Shenzhen, Guangdong 518043 (CN)
(72) Inventor: LIANG, Zhigang, Shenzhen, Guangdong 518043 (CN); MENG, Yuandong, Shenzhen, Guangdong 518043 (CN); NI, Hui, Shenzhen, Guangdong 518043 (CN)
(74) Representative: Isarpatent
(86) International application number: PCT/CN2023/089927
(87) International publication number: WO 2024/007688

(57) **Abstract**

A bidirectional on-board charger (10) includes a direct current bus (100), two bus capacitors, a power factor correction circuit (101), and a controller (102). The power factor correction circuit includes (101): a first bridge arm (1011), connected in series between a positive electrode and a negative electrode of the direct current bus (100), where a midpoint of the first bridge arm (1011) is connected to a series connection point of the two bus capacitors through a first switch (K₁); and three second bridge arms, separately connected in series between the positive electrode and the negative electrode of the direct current bus (100). The controller (102) is configured to: control the first switch (K₁) to be turned off, and control at least one of the second bridge arms to output a direct current to charge a power battery (12); or control the first switch (K₁) to be turned on, and control a midpoint of at least one of the second bridge arms to output an alternating current to supply power to an alternating current load (13). AnVehicle power system and an electric vehicle are further disclosed. The charger is compatible with a forward charging function of charging the power battery and a reverse discharging function of supplying power to the alternating current load, thereby greatly reducing circuit costs. Therefore, operational flexibility is high, and applicability is high.

## Description

### CROSS-REFERENCE TO RELATED APPLICATIONS

This application claims priority to Chinese Patent Application No. 202210782895.3, filed with the China National Intellectual Property Administration on July 5, 2022 and entitled "BIDIRECTIONAL ON-BOARD CHARGER, VEHICLE POWER SYSTEM, AND ELECTRIC VEHICLE", which is incorporated herein by reference in its entirety.

### TECHNICAL FIELD

This application relates to the field of power electronics technologies, and in particular, to a bidirectional on-board charger, an Vehicle power system, and an electric vehicle.

### BACKGROUND

Currently, an on-board charger (on-board charger, OBC) is a charger fixedly mounted on an electric vehicle. An alternating current side of the on-board charger is connected to an alternating current power grid, and a direct current side of the on-board charger is connected to a power battery. The on-board charger is configured to convert an output voltage of the alternating current power grid into a direct current voltage to charge the power battery. However, when the alternating current side of the on-board charger is connected to an external load, the on-board charger cannot meet a requirement for charging the external load, and consequently applicability is poor.

### SUMMARY

This application provides a bidirectional on-board charger, an Vehicle power system, and an electric vehicle, so that the bidirectional on-board charger is compatible with a forward charging function of charging a power battery and a reverse discharging function of supplying power to an alternating current load, thereby greatly reducing circuit costs. Therefore, operational flexibility is high, and applicability is high.

According to a first aspect, this application provides a bidirectional on-board charger, configured to charge a power battery by using a three-phase alternating current power supply or supply power to an alternating current load by using a power battery. The bidirectional on-board charger includes:
a direct current bus, configured to transmit a direct current;
two bus capacitors, connected in series between a positive electrode and a negative electrode of the direct current bus;
a power factor correction (power factor correction, PFC) circuit, configured to receive a single-phase alternating current or a three-phase alternating current provided by the three-phase alternating current power supply, or configured to receive a direct current provided by the power battery, where the power factor correction circuit includes:
   a first bridge arm, connected in series between the positive electrode and the negative electrode of the direct current bus, where a midpoint of the first bridge arm is connected to a series connection point of the two bus capacitors through a first switch; and
   three second bridge arms, separately connected in series between the positive electrode and the negative electrode of the direct current bus, where a midpoint of at least one of the second bridge arms is configured to receive the single-phase alternating current, or midpoints of the three second bridge arms are configured to receive the three-phase alternating current, or at least one of the second bridge arms is configured to receive the direct current; and
   a controller, configured to:
      control the first switch to be turned off, and control the at least one of the second bridge arms to output a direct current to charge the power battery; or
      control the first switch to be turned on, and control the midpoint of the at least one of the second bridge arms to output an alternating current to supply power to the alternating current load.

In this application, the first switch and the three second bridge arms may be controlled to cooperate with each other, so that a forward charging function of charging the power battery and a reverse discharging function of supplying power to the alternating current load are implemented, thereby greatly reducing circuit costs. Therefore, operational flexibility is high, and applicability is high.

With reference to the first aspect, in a first possible implementation, the first bridge arm includes two diodes connected in series. A series connection point of the two diodes serves as the midpoint of the first bridge arm, and therefore costs of the bridge arm are lower. The second bridge arm includes a second switch and a third switch connected in series, and a series connection point of the second switch and the third switch serves as a midpoint of the second bridge arm.

The controller is configured to:
control a second switch and a third switch in the at least one of the second bridge arms to be alternately turned on, so that the single-phase alternating current is converted into the direct current or the direct current is converted into the alternating current; or
control second switches and third switches in the three second bridge arms to be alternately turned on, so that the three-phase alternating current is converted into the direct current.

In this application, actions of some or all second bridge arms in the three second bridge arms are controlled, so that the single-phase alternating current may be converted into the direct current, or the direct current may be converted into the alternating current, or the three-phase alternating current may be converted into the direct current, thereby meeting different working requirements of the bidirectional on-board charger. Therefore, operational flexibility is high.

With reference to the first possible implementation of the first aspect, in a second possible implementation, the bidirectional on-board charger includes three fourth switches corresponding to the three second bridge arms, and a midpoint of one of the second bridge arms is connected to one live wire of the three-phase alternating current power supply or a first connection terminal of the alternating current load through a fourth switch corresponding to the second bridge arm. The midpoints of the three second bridge arms, the three fourth switches, and three live wires of the three-phase alternating current power supply are in one-to-one correspondence and connected.

The controller is configured to:
control any one of the fourth switches to be turned on, and control the other two of the fourth switches to be turned off, so that the midpoint of the at least one of the second bridge arms receives the single-phase alternating current or outputs the alternating current; or
control the three fourth switches to be turned on, so that the midpoints of the three second bridge arms receive the three-phase alternating current.

In this application, any fourth switch or all fourth switches in the three fourth switches are controlled to be turned on, so that the midpoint of the second bridge arm may receive the single-phase alternating current, or output the alternating current, or receive the three-phase alternating current, thereby meeting different working requirements of the bidirectional on-board charger. Therefore, operational flexibility is high.

With reference to the second possible implementation of the first aspect, in a third possible implementation, the three second bridge arms include the other two of the second bridge arms other than a second bridge arm corresponding to the any one of the fourth switches, and the bidirectional on-board charger includes one fifth switch. A midpoint of any one of the other two of the second bridge arms is connected to a first connection end of the any one of the fourth switches through the fifth switch, and the first connection end of the any one of the fourth switches is connected to one live wire of the three-phase alternating current power supply or the first connection terminal of the alternating current load.

The controller is configured to:
control the any one of the fourth switches and the fifth switch to be turned on, and control the other two of the fourth switches to be turned off, so that the midpoint of the at least one of the second bridge arms receives the single-phase alternating current or outputs the alternating current; or
control the three fourth switches to be turned off, and control the fifth switch to be turned on, so that the midpoint of the at least one of the second bridge arms receives the single-phase alternating current or outputs the alternating current.

In this application, each of the three fourth switches and the fifth switch is controlled to be turned on or turned off, so that the midpoint of the second bridge arm may receive the single-phase alternating current or output the alternating current, thereby meeting different working requirements of the bidirectional on-board charger. Therefore, operational flexibility is high.

With reference to the second possible implementation of the first aspect, in a fourth possible implementation, the three second bridge arms include the other two of the second bridge arms other than a second bridge arm corresponding to the any one of the fourth switches, and the bidirectional on-board charger includes two fifth switches corresponding to the other two of the second bridge arms. A midpoint of any one of the other two of the second bridge arms is connected to a first connection end of the any one of the fourth switches through a fifth switch corresponding to the second bridge arm, and the first connection end of the any one of the fourth switches is connected to one live wire of the three-phase alternating current power supply or the first connection terminal of the alternating current load. Midpoints of the other two of the second bridge arms and the two fifth switches are in one-to-one correspondence and connected.

The controller is configured to:
control the any one of the fourth switches and the two fifth switches to be turned on, and control the other two of the fourth switches to be turned off, so that the midpoint of the at least one of the second bridge arms receives the single-phase alternating current or outputs the alternating current; or
control the three fourth switches to be turned off, and control the two fifth switches to be turned on, so that the midpoint of the at least one of the second bridge arms receives the single-phase alternating current or outputs the alternating current.

In this application, each of the three fourth switches and the two fifth switches is controlled to be turned on or turned off, so that the midpoint of the second bridge arm may receive the single-phase alternating current or output the alternating current, thereby meeting different working requirements of the bidirectional on-board charger. Therefore, operational flexibility is high.

With reference to any one of the first possible implementation of the first aspect to the fourth possible implementation of the first aspect, in a fifth possible implementation, the bidirectional on-board charger includes a sixth switch, a midpoint of any one of the second bridge arms is connected to a neutral wire of the three-phase alternating current power supply through the sixth switch, and the bidirectional on-board charger is configured to charge the power battery by using the three-phase alternating current power supply.

The controller is configured to:
control the sixth switch to be turned off, so that the forward charging function of charging the power battery is implemented.

With reference to any one of the first possible implementation of the first aspect to the fourth possible implementation of the first aspect, in a sixth possible implementation, the bidirectional on-board charger includes a sixth switch, a midpoint of any one of the second bridge arms is connected to a second connection terminal of the alternating current load through the sixth switch, and the bidirectional on-board charger is configured to supply power to the alternating current load by using the power battery.

The controller is configured to:
control the sixth switch to be turned on, so that the reverse discharging function of supplying power to the alternating current load is implemented.

With reference to the sixth possible implementation of the first aspect, in a seventh possible implementation, the two bus capacitors include a positive bus capacitor and a negative bus capacitor. The controller is configured to: in a process of charging a load based on a direct current voltage provided by the power battery, collect a voltage of the positive bus capacitor and a voltage of the negative bus capacitor; and when a difference between the voltage of the positive bus capacitor and the voltage of the negative bus capacitor is greater than or equal to a first threshold, further control a second switch in the second bridge arm connected to the sixth switch to be turned on, so that the voltage of the positive bus capacitor and the voltage of the negative bus capacitor are balanced, thereby suppressing voltage fluctuation at a midpoint of a bus capacitor to improve power supply stability of the bidirectional on-board charger. Therefore, applicability is high. The difference is a value obtained by subtracting the voltage of the negative bus capacitor from the voltage of the positive bus capacitor.

With reference to the seventh possible implementation of the first aspect, in an eighth possible implementation, the controller is configured to: when a difference between the voltage of the negative bus capacitor and the voltage of the positive bus capacitor is greater than or equal to a second threshold, control a third switch in the second bridge arm connected to the sixth switch to be turned on, so that the voltage of the positive bus capacitor and the voltage of the negative bus capacitor are balanced, thereby suppressing voltage fluctuation at a midpoint of a bus capacitor to improve power supply stability of the bidirectional on-board charger. Therefore, applicability is high. The difference is a value obtained by subtracting the voltage of the positive bus capacitor from the voltage of the negative bus capacitor.

According to a second aspect, this application provides an EV power trend system, including a power battery and the on-board charger provided in any one of the first aspect to the eighth possible implementation of the first aspect; and the on-board charger is configured to charge the power battery. The bidirectional on-board charger is compatible with a forward charging function and a reverse discharging function of single-phase and three-phase inputs. Therefore, this may improve working efficiency of the EV power trend system, and greatly reduce circuit costs of the EV power trend system, and applicability is high.

According to a third aspect, this application provides an electric vehicle, including a power battery, a drive motor, and the on-board charger provided in any one of the first aspect to the eighth possible implementation of the first aspect; the on-board charger is configured to supply power to the power battery; and the power battery is configured to supply power to the drive motor.

In this application, the bidirectional on-board charger may be compatible with the forward charging function and the reverse discharging function of the single-phase and three-phase inputs, thereby greatly reducing circuit costs. Therefore, operational flexibility is high, and applicability is high.

### BRIEF DESCRIPTION OF DRAWINGS

FIG. 1 is a diagram of a structure of an electric vehicle according to this application;
FIG. 2 is a diagram of a structure of a bidirectional on-board charger according to this application;
FIG. 3A is a schematic of a circuit of a bidirectional on-board charger according to this application;
FIG. 3B is a schematic of another circuit of a bidirectional on-board charger according to this application;
FIG. 4A is a schematic of another circuit of a bidirectional on-board charger according to this application;
FIG. 4B is a schematic of another circuit of a bidirectional on-board charger according to this application;
FIG. 5A is a schematic of another circuit of a bidirectional on-board charger according to this application;
FIG. 5B is a schematic of another circuit of a bidirectional on-board charger according to this application;
FIG. 6A is a schematic of another circuit of a bidirectional on-board charger according to this application;
FIG. 6B is a schematic of another circuit of a bidirectional on-board charger according to this application;
FIG. 7A is a schematic of another circuit of a bidirectional on-board charger according to this application;
FIG. 7B is a schematic of another circuit of a bidirectional on-board charger according to this application;
FIG. 8A is a schematic of another circuit of a bidirectional on-board charger according to this application;
FIG. 8B is a schematic of another circuit of a bidirectional on-board charger according to this application; and
FIG. 9 is a diagram of a structure of anEV power trend system according to this application.

### DESCRIPTION OF EMBODIMENTS

The following describes an on-board charger, an EV power trend system, and an electric vehicle provided in this application with reference to the accompanying drawings.

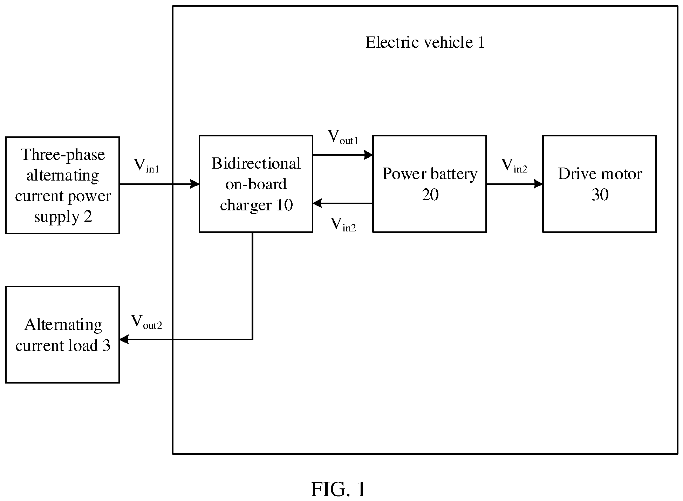

FIG. 1 is a diagram of a structure of an electric vehicle according to this application. As shown in FIG. 1, the electric vehicle 1 includes a bidirectional on-board charger 10, a power battery 20, and a drive motor 30. The bidirectional on-board charger 10 is configured to receive an input voltage Vᵢₙ₁ provided by a three-phase alternating current power supply 2, and provide an output voltage Vₒᵤₜ₁ to supply power to the power battery 20. The power battery 20 is configured to provide an input voltage Vᵢₙ₂ to the drive motor 30 to supply power to the drive motor 30.

In an embodiment, the three-phase alternating current power supply 2 may be an alternating current power grid, an alternating current charging pile, or an uninterruptible power supply (uninterruptible power system, UPS).

As shown in FIG. 1, the bidirectional on-board charger 10 is further configured to receive the input voltage Vᵢₙ₂ provided by the power battery 20, and provide an output voltage Vₒᵤₜ₂ to supply power to an alternating current load 3. In an embodiment, the alternating current load 3 is disposed inside the electric vehicle 1. For example, the alternating current load 3 may be a compressor motor or another low-power motor. In another embodiment, the alternating current load 3 is disposed outside the electric vehicle 1. The alternating current load 3 may be a mobile phone, a tablet computer, a notebook computer, a Bluetooth headset, a lamp, an induction cooker, a kettle, a game console, a power bank, or an intelligent wearable device.

The bidirectional on-board charger 10 provided in this embodiment of this application may be compatible with a forward charging function of charging the power battery 20 and a reverse discharging function of supplying power to the alternating current load 3, thereby simplifying a structural layout of the electric vehicle 1. Therefore, costs are low, a size is small, and an integration level is high.

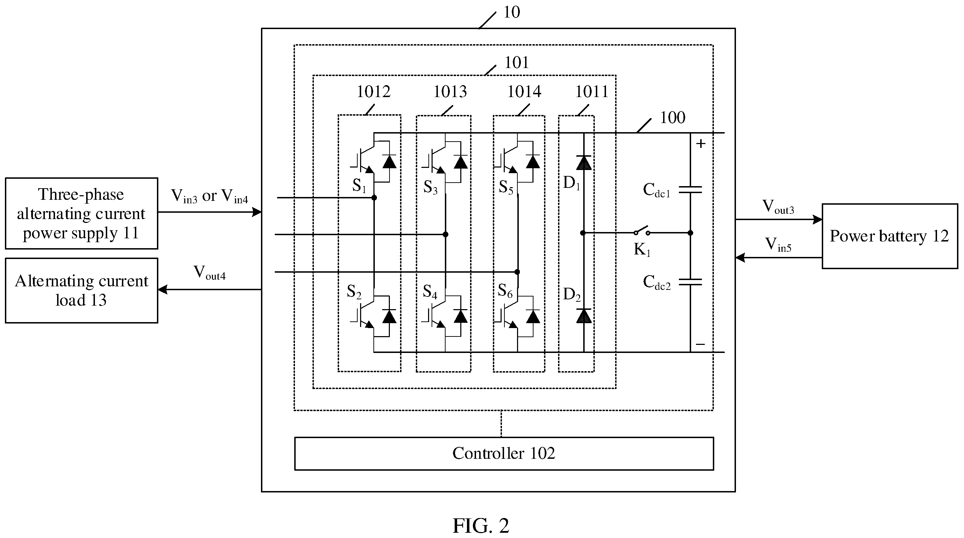

FIG. 2 is a diagram of a structure of a bidirectional on-board charger according to this application. The bidirectional on-board charger 10 is configured to charge a power battery 12 by using a three-phase alternating current power supply 11 or supply power to an alternating current load 13 by using a power battery 12. When the bidirectional on-board charger 10 charges the power battery 12 by using the three-phase alternating current power supply 11, the bidirectional on-board charger 10 operates in a forward charging mode. When the bidirectional on-board charger 10 supplies power to the alternating current load 13 by using the power battery 12, the bidirectional on-board charger 10 operates in a reverse discharging mode.

In an embodiment, the three-phase alternating current power supply 11 may be an alternating current power grid, an alternating current charging pile, or an uninterruptible power supply (uninterruptible power system, UPS). The alternating current load 13 may be a compressor motor, another low-power motor, a mobile phone, a tablet computer, a notebook computer, a Bluetooth headset, a lamp, an induction cooker, a kettle, a game console, a power bank, or an intelligent wearable device.

As shown in FIG. 2, the bidirectional on-board charger 10 includes a direct current bus 100, two bus capacitors, a first switch K₁, a power factor correction circuit 101, and a controller 102.

The direct current bus 100 is configured to transmit a direct current. When the bidirectional on-board charger 10 charges the power battery 12 by using the three-phase alternating current power supply 11, the direct current bus 100 is configured to transmit a direct current Vₒᵤₜ₃. When the bidirectional on-board charger 10 supplies power to the alternating current load 13 by using the power battery 12, the direct current bus 100 is configured to transmit a direct current Vᵢₙ₅.

The two bus capacitors include a positive bus capacitor C_{dc1} and a negative bus capacitor C_{dc2}, and are connected in series between a positive electrode and a negative electrode of the direct current bus 100. The positive bus capacitor C_{dc1} is a bus capacitor connected to the positive electrode of the direct current bus 100, and the negative bus capacitor C_{dc2} is a bus capacitor connected to the negative electrode of the direct current bus 100.

The power factor correction circuit 101 is configured to receive a single-phase alternating current Vᵢₙ₃ or a three-phase alternating current Vᵢₙ₄ provided by the three-phase alternating current power supply 11, or configured to receive the direct current Vᵢₙ₅ provided by the power battery 12. The power factor correction circuit 101 includes a first bridge arm 1011 and three second bridge arms.

The first bridge arm 1011 is connected in series between the positive electrode and the negative electrode of the direct current bus 100, and a midpoint of the first bridge arm 1011 is connected to a series connection point of the positive bus capacitor C_{dc1} and the negative bus capacitor C_{dc2} through the first switch K₁. The first switch K₁ may be a relay, and the series connection point of the positive bus capacitor C_{dc1} and the negative bus capacitor C_{dc2} may also be referred to as a midpoint of a bus capacitor or a midpoint of a bus capacitor.

The three second bridge arms include a second bridge arm 1012, a second bridge arm 1013, and a second bridge arm 1014, which are separately connected in series between the positive electrode and the negative electrode of the direct current bus 100. A midpoint of at least one of the second bridge arms is configured to receive the single-phase alternating current Vᵢₙ₃, or midpoints of the second bridge arm 1012, the second bridge arm 1013, and the second bridge arm 1014 are configured to receive the three-phase alternating current Vᵢₙ₄, or at least one of the second bridge arms is configured to receive the direct current Vᵢₙ₅.

The controller 102 may be a control board, a control chip, or software code. The controller 102 may establish wired connections or wireless connections with the first switch K₁ and the power factor correction circuit 101. In an embodiment, the controller 102 is configured to control turn-on or turn-off of the first switch K₁, and control running of the power factor correction circuit 101. Specifically, the controller 102 is configured to control actions of each second bridge arm in the second bridge arm 1012, the second bridge arm 1013, and the second bridge arm 1014, to control running of the power factor correction circuit 101.

The controller 102 is configured to:
control the first switch K₁ to be turned off, and control the at least one of the second bridge arms to output the direct current Vₒᵤₜ₃ to charge the power battery 12, where at this time, the bidirectional on-board charger 10 is in the forward charging mode; or
control the first switch K₁ to be turned on, and control the midpoint of the at least one of the second bridge arms to output an alternating current Vₒᵤₜ₄ to supply power to the alternating current load 13, where at this time, the bidirectional on-board charger 10 is in the reverse discharging mode.

The controller 102 provided in this application is configured to control the first switch K₁, the second bridge arm 1012, the second bridge arm 1013, and the second bridge arm 1014 to cooperate with each other, so that the bidirectional on-board charger 10 is compatible with a forward charging function of charging the power battery 12 and a reverse discharging function of supplying power to the alternating current load 13, thereby greatly reducing circuit costs. Therefore, operational flexibility is high, and applicability is high.

In an embodiment, when the first switch K₁ is turned on, the positive bus capacitor C_{dc1} or the negative bus capacitor C_{dc2}, the first switch K₁, the first bridge arm 1011, the second bridge arm 1012, the second bridge arm 1013, and the second bridge arm 1014 may form a reverse direct current (direct current, DC)/alternating current (alternating current, AC) circuit, which is configured to implement the reverse discharging function of supplying power to the alternating current load 13.

In an embodiment, the first bridge arm 1011 includes a diode D₁ and a diode D₂ connected in series, and a series connection point of the diode D₁ and the diode D₂ serves as the midpoint of the first bridge arm 1011, and therefore costs of the bridge arm are lower. In another embodiment, the first bridge arm 1011 includes two switches connected in series, and a series connection point of the two switches serves as the midpoint of the first bridge arm 1011.

In an embodiment, the second bridge arm includes a second switch and a third switch connected in series, and a series connection point of the second switch and the third switch serves as a midpoint of the second bridge arm. For example, the second bridge arm 1012 includes a second switch S₁ and a third switch S₂ connected in series, and a series connection point of the second switch S₁ and the third switch S₂ serves as a midpoint of the second bridge arm 1012; the second bridge arm 1013 includes a second switch S₃ and a third switch S₄ connected in series, and a series connection point of the second switch S₃ and the third switch S₄ serves as a midpoint of the second bridge arm 1013; and the second bridge arm 1014 includes a second switch S₅ and a third switch S₆ connected in series, and a series connection point of the second switch S₅ and the third switch S₆ serves as a midpoint of the second bridge arm 1014.

In an embodiment, the second switch and the third switch in each second bridge arm include but are not limited to an insulated gate bipolar transistor (insulated gate bipolar transistor, IGBT) or a metal-oxide-semiconductor field-effect transistor (metal-oxide-semiconductor field-effect transistor, MOSFET). The second switch and the third switch in each second bridge arm may be made of a silicon semiconductor material Si, a third-generation wide-bandgap semiconductor material silicon carbide SiC or gallium nitride GaN, or another switch material. For example, as shown in FIG. 2, the second switch and the third switch in each second bridge arm are IGBTs.

In an embodiment, the second switch and the third switch in each second bridge arm are complementarily turned on. To be specific, the third switch is turned off when the second switch is turned on, or the third switch is turned on when the second switch is turned off.

In an embodiment, the controller 102 is configured to: control a second switch and a third switch in the at least one of the second bridge arms to be alternately turned on, so that the single-phase alternating current Vᵢₙ₃ is converted into the direct current Vₒᵤₜ₃ to charge the power battery 12, or the direct current Vᵢₙ₅ is converted into the alternating current Vₒᵤₜ₄ to supply power to the alternating current load 13; or control the second switches and the third switches in the second bridge arm 1012, the second bridge arm 1013, and the second bridge arm 1014 to be alternately turned on, so that the three-phase alternating current Vᵢₙ₄ is converted into the direct current Vₒᵤₜ₃ to charge the power battery 12.

In an embodiment, for one second bridge arm, that a second switch and a third switch are alternately turned on includes: In one time period, in the second bridge arm, the second switch is turned on and the third switch is turned off; and in another time period, in the second bridge arm, the second switch is turned off and the third switch is turned on. The one time period and the another time period are within one switching period of the second bridge arm, and the another time period is after the one time period.

The controller 102 provided in this embodiment of this application is configured to control actions of some or all second bridge arms in the second bridge arm 1012, the second bridge arm 1013, and the second bridge arm 1014, so that the single-phase alternating current Vᵢₙ₃ is converted into the direct current Vₒᵤₜ₃, or the direct current Vᵢₙ₅ is converted into the alternating current Vₒᵤₜ₄, or the three-phase alternating current Vᵢₙ₄ is converted into the direct current Vₒᵤₜ₃, thereby meeting different working requirements of the bidirectional on-board charger 10. Therefore, operational flexibility is high.

In an embodiment, the bidirectional on-board charger 10 is configured to charge the power battery 12 by using the three-phase alternating current power supply 11, and the diode D₁ and the diode D₂ in the first bridge arm 1011 are alternately turned on. Specifically, when the diode D₁ is turned on, the diode D₂ is cut off; or when the diode D₁ is cut off, the diode D₂ is turned on.

In another embodiment, the bidirectional on-board charger 10 is configured to supply power to the alternating current load 13 by using the power battery 12, and both the diode D₁ and the diode D₂ in the first bridge arm 1011 are cut off.

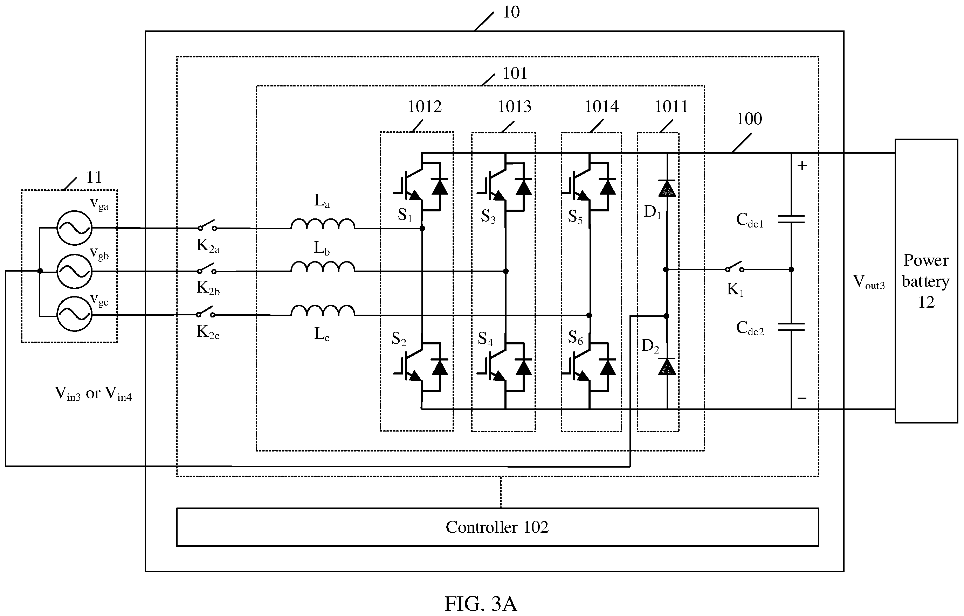

FIG. 3A is a schematic of a circuit of a bidirectional on-board charger according to this application. As shown in FIG. 3A, the three-phase alternating current power supply 11 is a power supply including three alternating current potentials that have a same frequency, an equal amplitude, and a phase difference of 120 electrical degrees between each other. The three alternating current potentials include an alternating current potential V_{ga}, an alternating current potential V_{gb}, and an alternating current potential V_{gc}. Three live wires of the three-phase alternating current power supply 11 are respectively led out from the alternating current potential V_{ga}, the alternating current potential V_{gb}, and the alternating current potential V_{gc}, and a neutral wire of the three-phase alternating current power supply 11 is led out from a neutral point of the alternating current potential V_{ga}, the alternating current potential V_{gb}, and the alternating current potential V_{gc}. The neutral wire may also be referred to as an N wire.

As shown in FIG. 3A, the bidirectional on-board charger 10 includes three fourth switches corresponding to the second bridge arm 1012, the second bridge arm 1013, and the second bridge arm 1014. A midpoint of one second bridge arm in the second bridge arm 1012, the second bridge arm 1013, and the second bridge arm 1014 is connected to one live wire of the three-phase alternating current power supply 11 through a fourth switch corresponding to the second bridge arm. The midpoints of the second bridge arm 1012, the second bridge arm 1013, and the second bridge arm 1014, the three fourth switches, and the three live wires of the three-phase alternating current power supply 11 are in one-to-one correspondence and connected. It should be noted that, for a connection relationship between other devices in the bidirectional on-board charger 10, refer to the embodiment corresponding to FIG. 2. Details are not described herein again.

The three fourth switches include a fourth switch K₂ₐ, a fourth switch K_{2b}, and a fourth switch K_{2c}. The midpoint of the second bridge arm 1012 is connected, through the fourth switch K₂ₐ, to the live wire led out of the alternating current potential V_{ga}, the midpoint of the second bridge arm 1013 is connected, through the fourth switch K_{2b}, to the live wire led out of the alternating current potential V_{gb}, and the midpoint of the second bridge arm 1014 is connected, through the fourth switch K_{2c}, to the live wire led out of the alternating current potential V_{gc}.

In an embodiment, the bidirectional on-board charger 10 includes a filter inductor Lₐ, a filter inductor L_{b}, and a filter inductor L_{c}. The midpoint of the second bridge arm 1012 is connected, through the filter inductor Lₐ and the fourth switch K₂ₐ, to the live wire led out of the alternating current potential V_{ga}, the midpoint of the second bridge arm 1013 is connected, through the filter inductor L_{b} and the fourth switch K_{2b}, to the live wire led out of the alternating current potential V_{gb}, and the midpoint of the second bridge arm 1014 is connected, through the filter inductor L_{c} and the fourth switch K_{2c}, to the live wire led out of the alternating current potential V_{gc}.

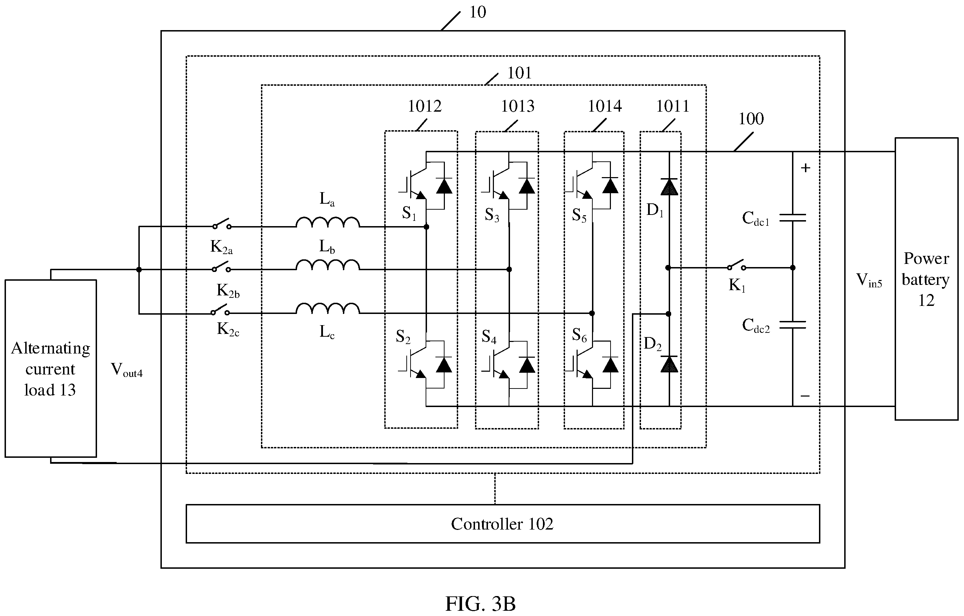

FIG. 3B is a schematic of another circuit of a bidirectional on-board charger according to this application. As shown in FIG. 3B, the bidirectional on-board charger 10 shown in FIG. 2 further includes three fourth switches corresponding to the second bridge arm 1012, the second bridge arm 1013, and the second bridge arm 1014. A midpoint of one second bridge arm in the second bridge arm 1012, the second bridge arm 1013, and the second bridge arm 1014 is connected to a first connection terminal of the alternating current load 13 through a fourth switch corresponding to the second bridge arm. The midpoints of the second bridge arm 1012, the second bridge arm 1013, and the second bridge arm 1014 and the three fourth switches are in one-to-one correspondence and connected. It should be noted that, for a connection relationship between other devices in the bidirectional on-board charger 10, refer to the embodiment corresponding to FIG. 2. Details are not described herein again.

The three fourth switches include a fourth switch K₂ₐ, a fourth switch K_{2b}, and a fourth switch K_{2c}. The midpoint of the second bridge arm 1012 is connected to the first connection terminal of the alternating current load 13 through the fourth switch K₂ₐ, the midpoint of the second bridge arm 1013 is connected to the first connection terminal of the alternating current load 13 through the fourth switch K_{2b}, and the midpoint of the second bridge arm 1014 is connected to the first connection terminal of the alternating current load 13 through the fourth switch K_{2c}.

In an embodiment, the bidirectional on-board charger 10 includes a filter inductor Lₐ, a filter inductor L_{b}, and a filter inductor L_{c}. The midpoint of the second bridge arm 1012 is connected to the first connection terminal of the alternating current load 13 through the filter inductor Lₐ and the fourth switch K₂ₐ, the midpoint of the second bridge arm 1013 is connected to the first connection terminal of the alternating current load 13 through the filter inductor L_{b} and the fourth switch K_{2b}, and the midpoint of the second bridge arm 1014 is connected to the first connection terminal of the alternating current load 13 through the filter inductor L_{c} and the fourth switch K_{2c}.

In an embodiment, the controller 102 may establish wired connections or wireless connections with the fourth switch K₂ₐ, the fourth switch K_{2b}, and the fourth switch K_{2c}. The controller 102 is configured to control the fourth switch K₂ₐ, the fourth switch K_{2b}, and the fourth switch K_{2c} to be turned on or turned off, so that the power factor correction circuit 101 receives the single-phase alternating current Vᵢₙ₃, or receives the three-phase alternating current Vᵢₙ₄, or outputs the alternating current Vₒᵤₜ₄.

Specifically, the controller 102 is configured to: control any one of the fourth switches to be turned on, and control the other two of the fourth switches to be turned off, so that the midpoint of the at least one of the second bridge arms receives the single-phase alternating current Vᵢₙ₃ or outputs the alternating current Vₒᵤₜ₄; or control the fourth switch K₂ₐ, the fourth switch K_{2b}, and the fourth switch K_{2c} to be turned on, so that the midpoints of the second bridge arm 1012, the second bridge arm 1013, and the second bridge arm 1014 receive the three-phase alternating current Vᵢₙ₄.

In an embodiment, the any one of the fourth switches may be the fourth switch K₂ₐ, the other two of the fourth switches may be the fourth switch K_{2b} and the fourth switch K_{2c}, and the at least one of the second bridge arms includes the second bridge arm 1012. In another embodiment, the any one of the fourth switches may be the fourth switch K_{2b}, the other two of the fourth switches may be the fourth switch K₂ₐ and the fourth switch K_{2c}, and the at least one of the second bridge arms includes the second bridge arm 1013. In another embodiment, the any one of the fourth switches may be the fourth switch K_{2c}, the other two of the fourth switches may be the fourth switch K₂ₐ and the fourth switch K_{2b}, and the at least one of the second bridge arms includes the second bridge arm 1014.

It can be learned that the controller 102 is configured to control any fourth switch or all fourth switches in the fourth switch K₂ₐ, the fourth switch K_{2b}, and the fourth switch K_{2c} to be turned on, so that the midpoint of the second bridge arm may receive the single-phase alternating current Vᵢₙ₃, or receive the three-phase alternating current Vᵢₙ₄, or output the alternating current Vₒᵤₜ₄, thereby meeting different working requirements of the bidirectional on-board charger 10. Therefore, operational flexibility is high.

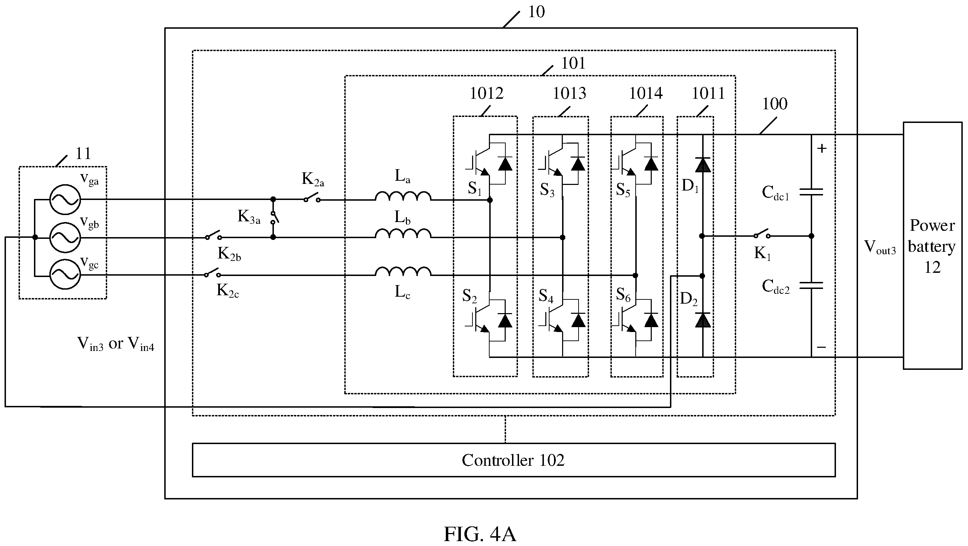

FIG. 4A is a schematic of another circuit of a bidirectional on-board charger according to this application. As shown in FIG. 4A, the bidirectional on-board charger 10 includes one fifth switch K₃ₐ, and the second bridge arm 1012, the second bridge arm 1013, and the second bridge arm 1014 include the other two of the second bridge arms other than a second bridge arm corresponding to the any one of the fourth switches. A midpoint of any one of the other two of the second bridge arms is connected to a first connection end of the any one of the fourth switches through the fifth switch K₃ₐ, and the first connection end of the any one of the fourth switches is connected to one live wire of the three-phase alternating current power supply 11. It should be noted that, for a connection relationship between other devices in the bidirectional on-board charger 10, refer to the embodiment corresponding to FIG. 3A. Details are not described herein again.

In an embodiment, the any one of the fourth switches is the fourth switch K₂ₐ, the second bridge arm corresponding to the any one of the fourth switches is the second bridge arm 1012, the other two of the second bridge arms are the second bridge arm 1013 and the second bridge arm 1014, and the any one of the other two of the second bridge arms is the second bridge arm 1013. The midpoint of the second bridge arm 1013 is connected to a first connection end of the fourth switch K₂ₐ through the fifth switch K₃ₐ, and the first connection end of the fourth switch K₂ₐ is connected to the live wire led out of the alternating current potential V_{ga}.

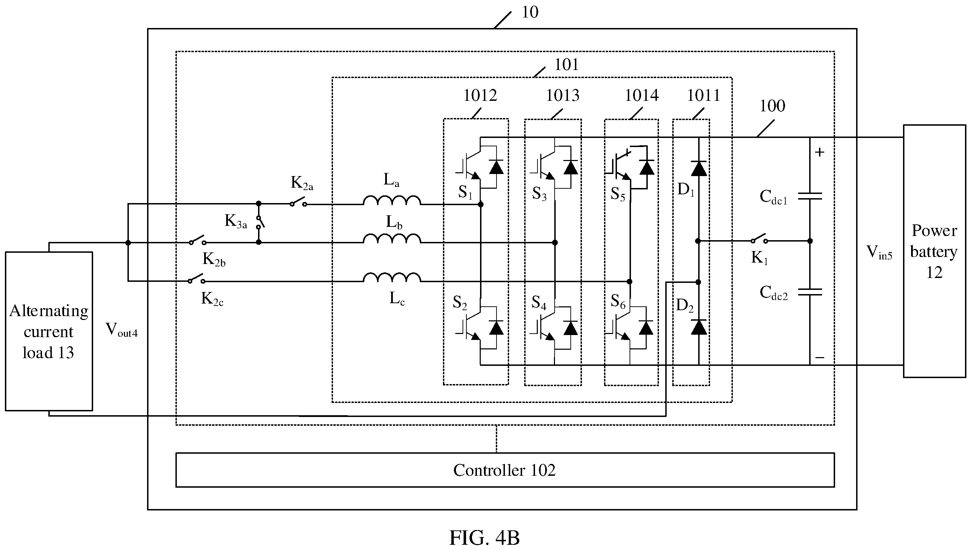

FIG. 4B is a schematic of another circuit of a bidirectional on-board charger according to this application. As shown in FIG. 4B, the bidirectional on-board charger 10 includes one fifth switch K₃ₐ, and the second bridge arm 1012, the second bridge arm 1013, and the second bridge arm 1014 include the other two of the second bridge arms other than a second bridge arm corresponding to the any one of the fourth switches. A midpoint of any one of the other two of the second bridge arms is connected to a first connection end of the any one of the fourth switches through the fifth switch K₃ₐ, and the first connection end of the any one of the fourth switches is connected to the first connection terminal of the alternating current load 13. It should be noted that, for a connection relationship between other devices in the bidirectional on-board charger 10, refer to the embodiment corresponding to FIG. 3B. Details are not described herein again.

In an embodiment, the any one of the fourth switches is the fourth switch K₂ₐ, the second bridge arm corresponding to the any one of the fourth switches is the second bridge arm 1012, the other two of the second bridge arms are the second bridge arm 1013 and the second bridge arm 1014, and the any one of the other two of the second bridge arms is the second bridge arm 1013. The midpoint of the second bridge arm 1013 is connected to a first connection end of the fourth switch K₂ₐ through the fifth switch K₃ₐ, and the first connection end of the fourth switch K₂ₐ is connected to the first connection terminal of the alternating current load 13.

The controller 102 provided in this embodiment of this application may establish wired connections or wireless connections with the fourth switch K₂ₐ, the fourth switch K_{2b}, the fourth switch K_{2c}, and the fifth switch K₃ₐ. In an embodiment, the controller 102 is configured to control the fourth switch K₂ₐ, the fourth switch K_{2b}, the fourth switch K_{2c}, and the fifth switch K₃ₐ to be turned on or turned off, so that the power factor correction circuit 101 receives the single-phase alternating current Vᵢₙ₃, or receives the three-phase alternating current Vᵢₙ₄, or outputs the alternating current Vₒᵤₜ₄.

The power factor correction circuit 101 provided in this embodiment of this application is configured to receive the single-phase alternating current Vᵢₙ₃ or output the alternating current Vₒᵤₜ₄. The controller 102 is configured to: control the fourth switch K₂ₐ and the fifth switch K₃ₐ to be turned on, and control the other two of the fourth switches to be turned off, so that the midpoint of the at least one of the second bridge arms receives the single-phase alternating current Vᵢₙ₃ or outputs the alternating current Vₒᵤₜ₄, where the other two of the fourth switches are the fourth switch K_{2b} and the fourth switch K_{2c}, and the at least one of the second bridge arms includes the second bridge arm 1012 and the second bridge arm 1013; or control the fourth switch K₂ₐ, the fourth switch K_{2b}, and the fourth switch K_{2c} to be turned off, and control the fifth switch K₃ₐ to be turned on, so that the midpoint of the at least one of the second bridge arms receives the single-phase alternating current Vᵢₙ₃ or outputs the alternating current Vₒᵤₜ₄, where the at least one of the second bridge arms includes the second bridge arm 1013.

It can be learned that the controller 102 is configured to control each switch in the fourth switch K₂ₐ, the fourth switch K_{2b}, the fourth switch K_{2c}, and the fifth switch K₃ₐ to be turned on or turned off, so that the midpoint of the second bridge arm may receive the single-phase alternating current Vᵢₙ₃ or output the alternating current Vₒᵤₜ₄, thereby meeting different working requirements of the bidirectional on-board charger 10. Therefore, operational flexibility is high.

The power factor correction circuit 101 provided in this embodiment of this application is configured to receive the three-phase alternating current Vᵢₙ₄. The controller 102 is configured to: control the fourth switch K₂ₐ, the fourth switch K_{2b}, and the fourth switch K_{2c} to be turned on, and control the fifth switch K₃ₐ to be turned off, so that the midpoints of the second bridge arm 1012, the second bridge arm 1013, and the second bridge arm 1014 receive the three-phase alternating current Vᵢₙ₄.

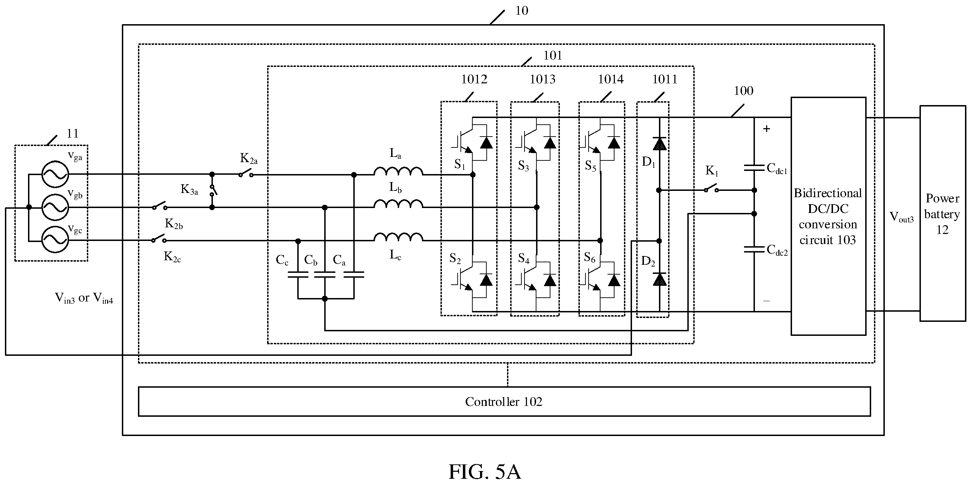

FIG. 5A is a schematic of another circuit of a bidirectional on-board charger according to this application. As shown in FIG. 5A, the power factor correction circuit 101 includes three filter capacitors corresponding to the filter inductor Lₐ, the filter inductor L_{b}, and the filter inductor L_{c}, and the three filter capacitors include a filter capacitor Cₐ, a filter capacitor C_{b}, and a filter capacitor C_{c}. The filter inductor Lₐ is connected to a first connection end of the filter capacitor Cₐ, the filter inductor L_{b} is connected to a first connection end of the filter capacitor C_{b}, and the filter inductor L_{c} is connected to a first connection end of the filter capacitor C_{c}. A second connection end of each filter capacitor in the filter capacitor Cₐ, the filter capacitor C_{b}, and the filter capacitor C_{c} is connected to the series connection point of the positive bus capacitor C_{dc1} and the negative bus capacitor C_{dc2}.

The bidirectional on-board charger 10 includes a bidirectional DC/DC conversion circuit 103, and the bidirectional DC/DC conversion circuit 103 is connected in series between the positive electrode and the negative electrode of the direct current bus 100. It should be noted that, for a connection relationship between other devices in the bidirectional on-board charger 10, refer to the embodiment corresponding to FIG. 4A. Details are not described herein again.

In an embodiment, the filter inductor Lₐ, the filter inductor L_{b}, the filter inductor L_{c}, the filter capacitor Cₐ, the filter capacitor C_{b}, and the filter capacitor C_{c} may form a filter circuit, and the first bridge arm 1011, the second bridge arm 1012, the second bridge arm 1013, and the second bridge arm 1014 may form a bridge arm conversion circuit. The bidirectional on-board charger 10 provided in this embodiment of this application is configured to charge the power battery 12 by using the three-phase alternating current power supply 11. The filter circuit is configured to filter the single-phase alternating current Vᵢₙ₃ or the three-phase alternating current Vᵢₙ₄ provided by the three-phase alternating current power supply 11, and output the direct current Vₒᵤₜ₃ through the bridge arm conversion circuit to charge the power battery 12, thereby reducing switching ripples of the bidirectional on-board charger 10. Therefore, applicability is high. In an embodiment, the bidirectional DC/DC conversion circuit 103 is configured to receive an output voltage of the bridge arm conversion circuit, and output the direct current Vₒᵤₜ₃ to charge the power battery 12.

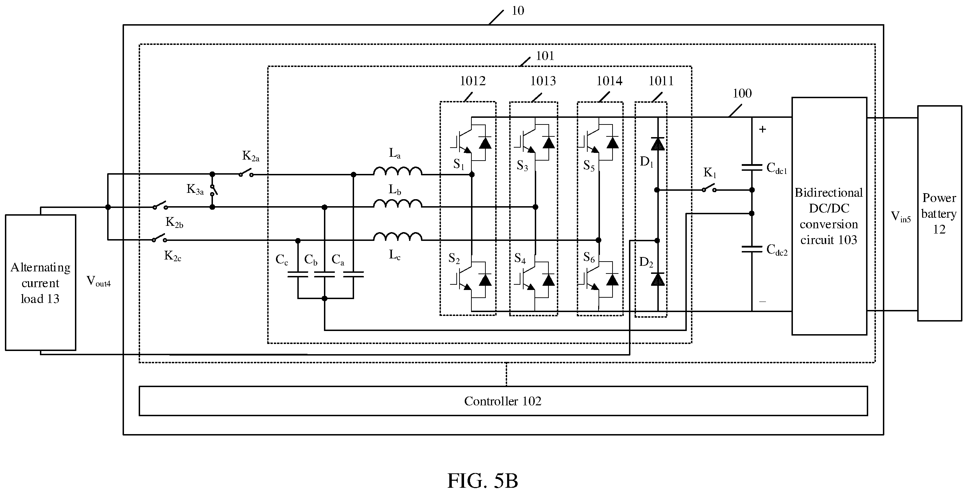

FIG. 5B is a schematic of another circuit of a bidirectional on-board charger according to this application. As shown in FIG. 5B, for an internal circuit structure of the bidirectional on-board charger 10, refer to the embodiment corresponding to FIG. 5A. Details are not described herein again. The power factor correction circuit 101 provided in this embodiment of this application is configured to supply power to the alternating current load 13 by using the power battery 12. The bridge arm conversion circuit is configured to: receive the direct current Vᵢₙ₅ provided by the power battery 12 or a direct current output by the power battery 12 through the bidirectional DC/DC conversion circuit 103, and output the alternating current Vₒᵤₜ₄ after being filtered by the filter circuit to supply power to the alternating current load 13, thereby reducing switching ripples of the bidirectional on-board charger 10. Therefore, applicability is high.

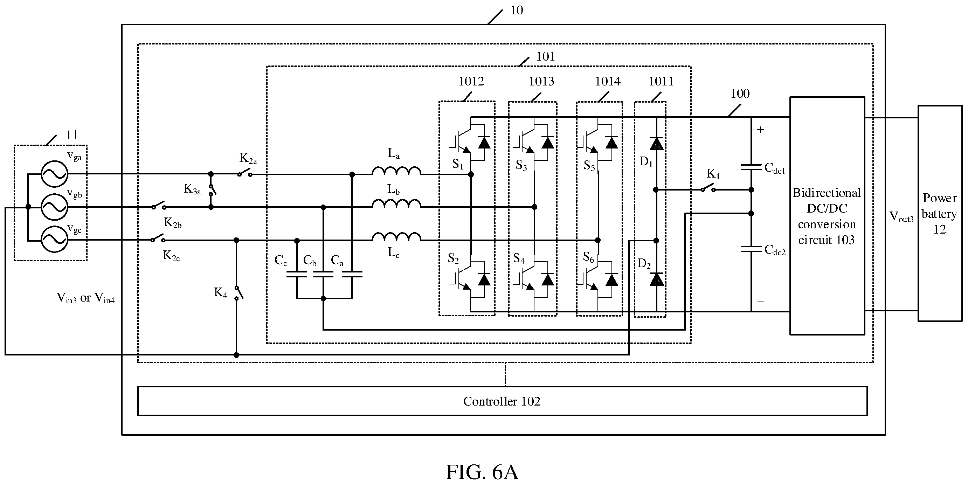

FIG. 6A is a schematic of another circuit of a bidirectional on-board charger according to this application. As shown in FIG. 6A, the bidirectional on-board charger 10 further includes a sixth switch K₄, and a midpoint of any one of the second bridge arms is connected to the neutral wire of the three-phase alternating current power supply 11 through the sixth switch K₄. In an embodiment, the any one of the second bridge arms may be the second bridge arm 1014. It should be noted that, for a connection relationship between other devices in the bidirectional on-board charger 10, refer to the embodiment corresponding to FIG. 5A. Details are not described herein again.

The bidirectional on-board charger 10 provided in this embodiment of this application is configured to charge the power battery 12 by using the three-phase alternating current power supply 11. The controller 102 is configured to control the sixth switch K₄ to be turned off. For a specific control manner of another switch in the bidirectional on-board charger 10, refer to the embodiment corresponding to FIG. 4A. Details are not described herein again.

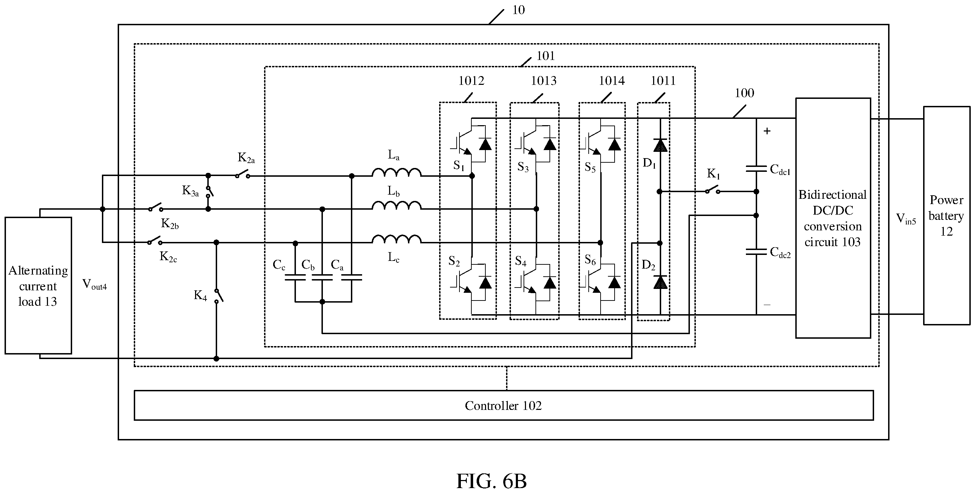

FIG. 6B is a schematic of another circuit of a bidirectional on-board charger according to this application. As shown in FIG. 6B, the bidirectional on-board charger 10 further includes a sixth switch K₄, and a midpoint of any one of the second bridge arms is connected to a second connection terminal of the alternating current load 13 through the sixth switch K₄. In an embodiment, the any one of the second bridge arms may be the second bridge arm 1014. It should be noted that, for a connection relationship between other devices in the bidirectional on-board charger 10, refer to the embodiment corresponding to FIG. 5B. Details are not described herein again.

The bidirectional on-board charger 10 provided in this embodiment of this application is configured to supply power to the alternating current load 13 by using the power battery 12. The controller 102 is configured to control the sixth switch K₄ to be turned on. For a specific control manner of another switch in the bidirectional on-board charger 10, refer to the embodiment corresponding to FIG. 4B. Details are not described herein again.

In an embodiment, the second bridge arm 1014 connected to the sixth switch K₄ may be a balancing bridge arm of the positive bus capacitor C_{dc1} and the negative bus capacitor C_{dc2}, and the balancing bridge arm is configured to balance a voltage of the positive bus capacitor C_{dc1} and a voltage of the negative bus capacitor C_{dc2}. In a process in which the power battery 12 supplies power to the alternating current load 13, the controller 102 is configured to: collect the voltage of the positive bus capacitor C_{dc1} and the voltage of the negative bus capacitor C_{dc2}; and when a difference between the voltage of the positive bus capacitor C_{dc1} and the voltage of the negative bus capacitor C_{dc2} is greater than or equal to a first threshold, control the second switch S₅ in the second bridge arm 1014 connected to the sixth switch K₄ to be turned on, so that the voltage of the positive bus capacitor C_{dc1} and the voltage of the negative bus capacitor C_{dc2} are balanced to suppress voltage fluctuation at a midpoint of a bus capacitor, thereby improving power supply stability of the bidirectional on-board charger 10.

A current output by a positive end of the power battery 12 sequentially flows through the second switch S₅, the sixth switch K₄, the first switch K₁, and the negative bus capacitor C_{dc2} and returns to a negative end of the power battery 12 to form a balancing circuit, and the balancing circuit is configured to balance the voltage of the positive bus capacitor C_{dc1} and the voltage of the negative bus capacitor C_{dc2}. A specific turn-on duration of the second switch S₅ may be determined based on the difference, and the difference is a value obtained by subtracting the voltage of the negative bus capacitor C_{dc2} from the voltage of the positive bus capacitor C_{dc1}. The first threshold is a threshold specified by a user or a threshold configured by the controller 102. For example, the first threshold is 10 V or another value.

In an embodiment, after collecting the voltage of the positive bus capacitor C_{dc1} and the voltage of the negative bus capacitor C_{dc2}, the controller 102 is configured to: when a difference between the voltage of the negative bus capacitor C_{dc2} and the voltage of the positive bus capacitor C_{dc1} is greater than or equal to a second threshold, control the third switch S₆ in the second bridge arm 1014 connected to the sixth switch K₄ to be turned on, so that the voltage of the positive bus capacitor C_{dc1} and the voltage of the negative bus capacitor C_{dc2} are balanced to suppress voltage fluctuation at a midpoint of a bus capacitor, thereby improving power supply stability of the bidirectional on-board charger 10.

A current output by the positive end of the power battery 12 sequentially flows through the positive bus capacitor C_{dc1}, the first switch K₁, the sixth switch K₄, and the third switch S₆ and returns to the negative end of the power battery 12 to form a balancing circuit, and the balancing circuit is configured to balance the voltage of the positive bus capacitor C_{dc1} and the voltage of the negative bus capacitor C_{dc2}. A specific turn-on duration of the third switch S₆ may be determined based on the difference, and the difference is a value obtained by subtracting the voltage of the positive bus capacitor C_{dc1} from the voltage of the negative bus capacitor C_{dc2}. The second threshold is a threshold specified by a user or a threshold configured by the controller 102. In an embodiment, the first threshold and the second threshold may be the same or may be different.

In an embodiment, the second bridge arm connected to the sixth switch K₄ may be the second bridge arm 1013. The controller 102 is configured to control the fifth switch K₃ₐ to be turned off. In another embodiment, the second bridge arm connected to the sixth switch K₄ may be the second bridge arm 1012. The controller 102 is configured to control the fourth switch K₂ₐ to be turned off. It can be learned that, when the second bridge arm connected to the sixth switch K₄ and the second bridge arm connected to a fourth switch or a fifth switch are a same bridge arm, the fourth switch or the fifth switch is turned off; or when the second bridge arm connected to the sixth switch K₄ and the second bridge arm connected to a fourth switch or a fifth switch are different bridge arms, the fourth switch or the fifth switch may be turned on or turned off. It should be noted that, for a specific control manner of another switch in the bidirectional on-board charger 10, refer to the embodiment corresponding to FIG. 4B. Details are not described herein again.

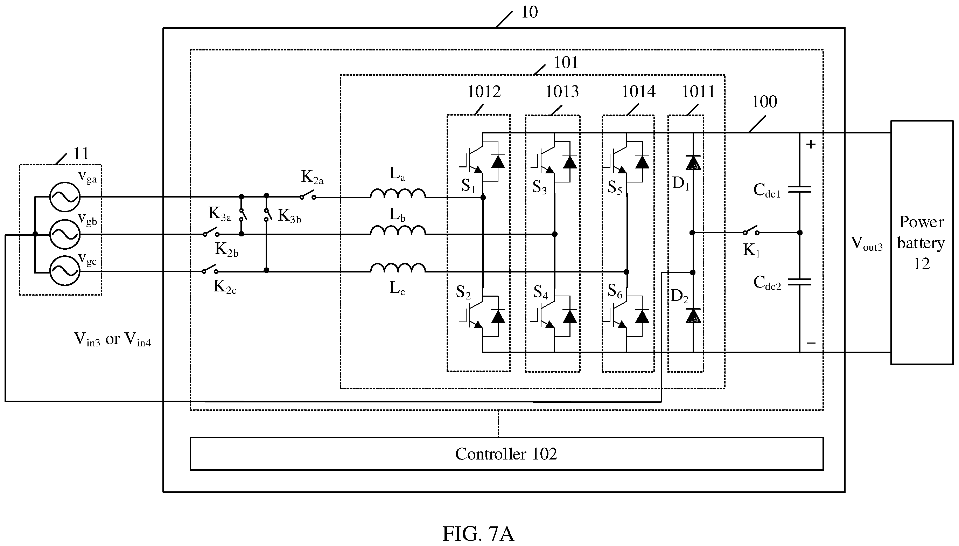

FIG. 7A is a schematic of another circuit of a bidirectional on-board charger according to this application. As shown in FIG. 7A, the second bridge arm 1012, the second bridge arm 1013, and the second bridge arm 1014 include the other two of the second bridge arms other than a second bridge arm corresponding to the any one of the fourth switches, the bidirectional on-board charger 10 includes two fifth switches corresponding to the other two of the second bridge arms, and the two fifth switches include a fifth switch K₃ₐ and a fifth switch K_{3b}. A midpoint of any one of the other two of the second bridge arms is connected to a first connection end of the any one of the fourth switches through a fifth switch corresponding to the second bridge arm, and the first connection end of the any one of the fourth switches is connected to one live wire of the three-phase alternating current power supply 11. It should be noted that, for a connection relationship between other devices in the bidirectional on-board charger 10, refer to the embodiment corresponding to FIG. 3A. Details are not described herein again.

In an embodiment, the any one of the fourth switches is the fourth switch K₂ₐ, the second bridge arm corresponding to the any one of the fourth switches is the second bridge arm 1012, and the other two of the second bridge arms are the second bridge arm 1013 and the second bridge arm 1014. The midpoint of the second bridge arm 1013 is connected to a first connection end of the fourth switch K₂ₐ through the fifth switch K₃ₐ corresponding to the second bridge arm 1013, the midpoint of the second bridge arm 1014 is connected to the first connection end of the fourth switch K₂ₐ through the fifth switch K_{3b} corresponding to the second bridge arm 1014, and the first connection end of the fourth switch K₂ₐ is connected to the live wire led out of the alternating current potential V_{ga}.

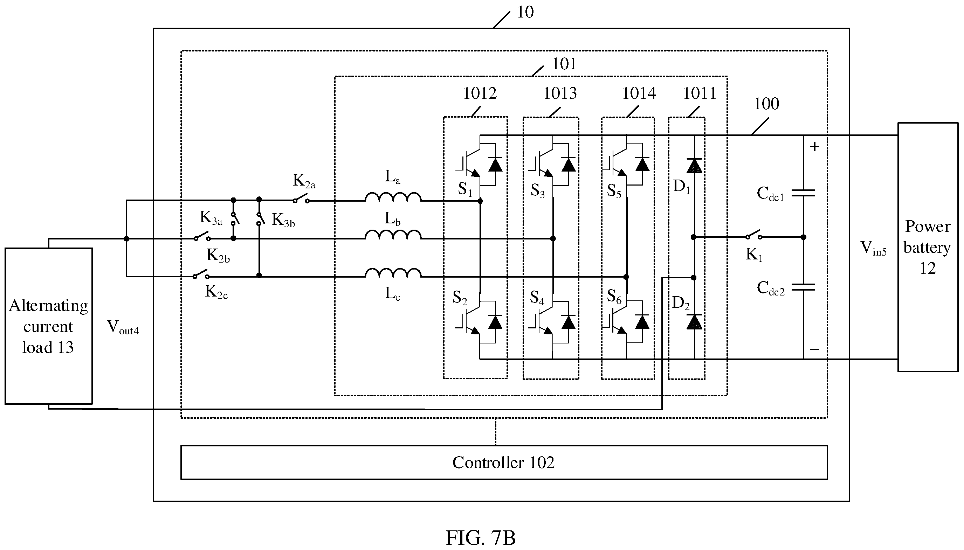

FIG. 7B is a schematic of another circuit of a bidirectional on-board charger according to this application. As shown in FIG. 7B, the second bridge arm 1012, the second bridge arm 1013, and the second bridge arm 1014 include the other two of the second bridge arms other than a second bridge arm corresponding to the any one of the fourth switches, and the bidirectional on-board charger 10 shown in FIG. 3B further includes a fifth switch K₃ₐ and a fifth switch K_{3b} that correspond to the other two of the second bridge arms. A midpoint of any one of the other two of the second bridge arms is connected to a first connection end of the any one of the fourth switches through a fifth switch corresponding to the second bridge arm, and the first connection end of the any one of the fourth switches is connected to the first connection terminal of the alternating current load 13. It should be noted that, for a connection relationship between other devices in the bidirectional on-board charger 10, refer to the embodiment corresponding to FIG. 3B. Details are not described herein again.

In an embodiment, the any one of the fourth switches may be the fourth switch K₂ₐ, the second bridge arm corresponding to the any one of the fourth switches is the second bridge arm 1012, and the other two of the second bridge arms are the second bridge arm 1013 and the second bridge arm 1014. The midpoint of the second bridge arm 1013 is connected to a first connection end of the fourth switch K₂ₐ through the fifth switch K₃ₐ corresponding to the second bridge arm 1013, the midpoint of the second bridge arm 1014 is connected to the first connection end of the fourth switch K₂ₐ through the fifth switch K_{3b} corresponding to the second bridge arm 1014, and the first connection end of the fourth switch K₂ₐ is connected to the first connection terminal of the alternating current load 13.

The controller 102 provided in this embodiment of this application may establish wired connections or wireless connections with the fourth switch K₂ₐ, the fourth switch K_{2b}, the fourth switch K_{2c}, the fifth switch K₃ₐ, and the fifth switch K_{3b}. The controller 102 is configured to control the fourth switch K₂ₐ, the fourth switch K_{2b}, the fourth switch K_{2c}, the fifth switch K₃ₐ, and the fifth switch K_{3b} to be turned on or turned off, so that the power factor correction circuit 101 receives the single-phase alternating current Vᵢₙ₃, or receives the three-phase alternating current Vᵢₙ₄, or outputs the alternating current Vₒᵤₜ₄.

The power factor correction circuit 101 provided in this embodiment of this application is configured to receive the single-phase alternating current Vᵢₙ₃ or output the alternating current Vₒᵤₜ₄. The controller 102 is configured to: control the fourth switch K₂ₐ, the fifth switch K₃ₐ, and the fifth switch K_{3b} to be turned on, and control other two of the fourth switches to be turned off, so that the midpoint of the at least one of the second bridge arms receives the single-phase alternating current Vᵢₙ₃ or outputs the alternating current Vₒᵤₜ₄, where the other two of the fourth switches are the fourth switch K_{2b} and the fourth switch K_{2c}, and the at least one of the second bridge arms includes the second bridge arm 1012, the second bridge arm 1013, and the second bridge arm 1014; or control the fourth switch K₂ₐ, the fourth switch K_{2b}, and the fourth switch K_{2c} to be turned off, and control the fifth switch K₃ₐ and the fifth switch K_{3b} to be turned on, so that the midpoint of the at least one of the second bridge arms receives the single-phase alternating current Vᵢₙ₃ or outputs the alternating current Vₒᵤₜ₄, where the at least one of the second bridge arms includes the second bridge arm 1013 and the second bridge arm 1014.

It can be learned that the controller 102 is configured to control each switch in the fourth switch K₂ₐ, the fourth switch K_{2b}, the fourth switch K_{2c}, the fifth switch K₃ₐ, and the fifth switch K_{3b} to be turned on or turned off, so that the midpoint of the second bridge arm receives the single-phase alternating current Vᵢₙ₃ or outputs the alternating current Vₒᵤₜ₄, thereby meeting different working requirements of the bidirectional on-board charger 10. Therefore, operational flexibility is high.

The power factor correction circuit 101 provided in this embodiment of this application is configured to receive the three-phase alternating current Vᵢₙ₄. The controller 102 is configured to: control the fourth switch K₂ₐ, the fourth switch K_{2b}, and the fourth switch K_{2c} to be turned on, and control the fifth switch K₃ₐ and the fifth switch K_{3b} to be turned off, so that the midpoints of the second bridge arm 1012, the second bridge arm 1013, and the second bridge arm 1014 receive the three-phase alternating current Vᵢₙ₄.

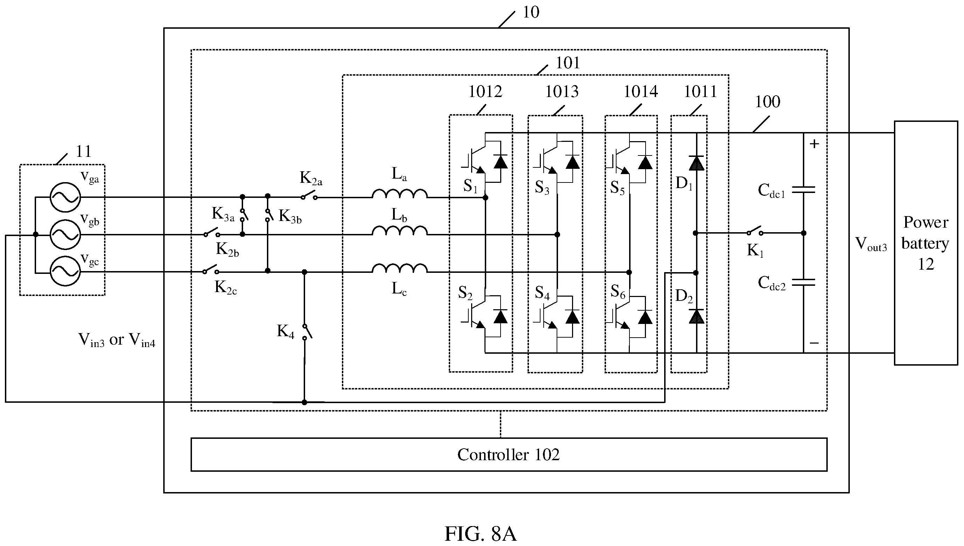

FIG. 8A is a schematic of another circuit of a bidirectional on-board charger according to this application. As shown in FIG. 8A, the bidirectional on-board charger 10 includes a sixth switch K₄, and the midpoint of the second bridge arm 1014 is connected to the neutral wire of the three-phase alternating current power supply 11 through the filter inductor L_{c} and the sixth switch K₄. It should be noted that, for a connection relationship between other devices in the bidirectional on-board charger 10, refer to the embodiment corresponding to FIG. 7A. Details are not described herein again.

The bidirectional on-board charger 10 provided in this embodiment of this application is configured to charge the power battery 12 by using the three-phase alternating current power supply 11. The controller 102 is configured to control the sixth switch K₄ to be turned off. For a specific control manner of another switch in the bidirectional on-board charger 10, refer to the embodiment corresponding to FIG. 7A. Details are not described herein again.

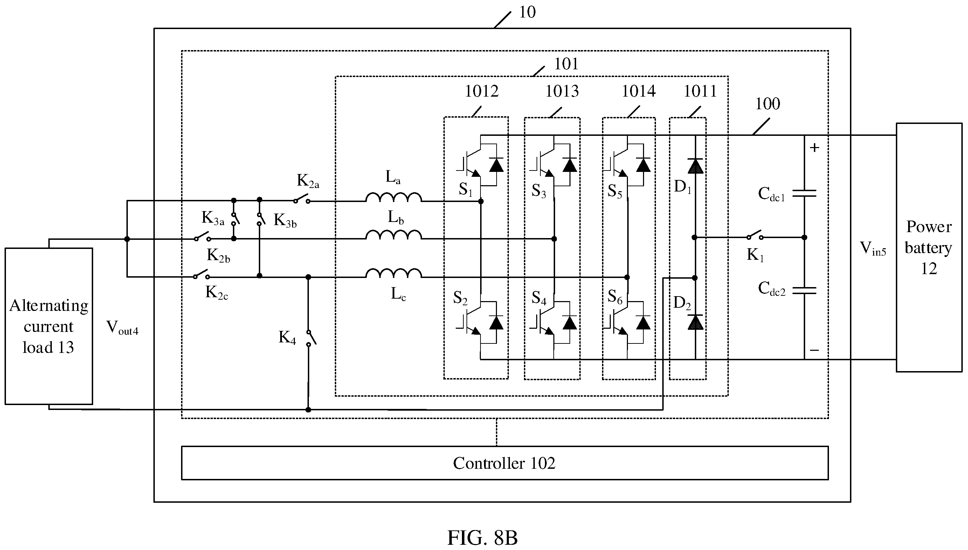

FIG. 8B is a schematic of another circuit of a bidirectional on-board charger according to this application. As shown in FIG. 8B, the bidirectional on-board charger 10 includes a sixth switch K₄, and the midpoint of the second bridge arm 1014 is connected to a second connection terminal of the alternating current load 13 through the filter inductor L_{c} and the sixth switch K₄. It should be noted that, for a connection relationship between other devices in the bidirectional on-board charger 10, refer to the embodiment corresponding to FIG. 7B. Details are not described herein again.

The bidirectional on-board charger 10 provided in this embodiment of this application is configured to supply power to the alternating current load 13 by using the power battery 12. The controller 102 is configured to control the fifth switch K₃ₐ and the sixth switch K₄ to be turned on, and control the fifth switch K_{3b} to be turned off. For a specific control manner of another switch in the bidirectional on-board charger 10, refer to the embodiment corresponding to FIG. 7B. Details are not described herein again.

In an embodiment, the second bridge arm 1014 may be a balancing bridge arm of the positive bus capacitor C_{dc1} and the negative bus capacitor C_{dc2}, and the balancing bridge arm is configured to balance a voltage of the positive bus capacitor C_{dc1} and a voltage of the negative bus capacitor C_{dc2}. For a specific working principle of the balancing bridge arm, refer to the embodiment corresponding to FIG. 6B. Details are not described herein again.

In the bidirectional on-board charger 10 provided in this application, the single-phase alternating current Vᵢₙ₃ or the three-phase alternating current Vᵢₙ₄ provided by the three-phase alternating current power supply 11 may be used for charging the power battery 12, or the direct current Vᵢₙ₅ provided by the power battery 12 may be used for supplying power to the alternating current load 13, so that the bidirectional on-board charger 10 is compatible with a forward charging function and a reverse discharging function of single-phase and three-phase inputs, thereby greatly reducing circuit costs. Therefore, operational flexibility is high, and applicability is high.

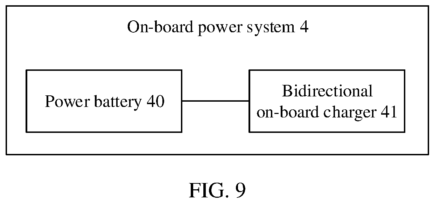

FIG. 9 is a diagram of a structure of an EV power trend system according to this application. As shown in FIG. 9, the EV power trend system 4 includes a power battery 40 and a bidirectional on-board charger 41, and the bidirectional on-board charger 41 is configured to charge the power battery 40. The bidirectional on-board charger 41 is compatible with a forward charging function and a reverse discharging function of single-phase and three-phase inputs. Therefore, this may improve working efficiency of the EV power trend system 4, and greatly reduce circuit costs of the EV power trend system 4, and applicability is high.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A bidirectional on-board charger, configured to charge a power battery by using a three-phase alternating current power supply or supply power to an alternating current load by using the power battery, wherein the bidirectional on-board charger comprises:
a direct current bus, configured to transmit a direct current;
two bus capacitors, connected in series between a positive electrode and a negative electrode of the direct current bus;
a power factor correction circuit, configured to receive a single-phase alternating current or a three-phase alternating current provided by the three-phase alternating current power supply, or configured to receive the direct current provided by the power battery, wherein the power factor correction circuit comprises:
a first bridge arm, connected in series between the positive electrode and the negative electrode of the direct current bus, wherein a midpoint of the first bridge arm is connected to a series connection point of the two bus capacitors through a first switch; and
three second bridge arms, separately connected in series between the positive electrode and the negative electrode of the direct current bus, wherein a midpoint of at least one of the second bridge arms is configured to receive the single-phase alternating current, or midpoints of the three second bridge arms are configured to receive the three-phase alternating current, or at least one of the second bridge arms is configured to receive the direct current; and
a controller, configured to:
control the first switch to be turned off, and control the at least one of the second bridge arms to output the direct current to charge the power battery; or
control the first switch to be turned on, and control the midpoint of the at least one of the second bridge arms to output an alternating current to supply power to the alternating current load.

2. The bidirectional on-board charger according to claim 1, wherein the first bridge arm comprises two diodes connected in series, and a series connection point of the two diodes serves as the midpoint of the first bridge arm; and the second bridge arm comprises a second switch and a third switch connected in series, and a series connection point of the second switch and the third switch serves as a midpoint of the second bridge arm; and
the controller is configured to:
control a second switch and a third switch in the at least one of the second bridge arms to be alternately turned on, so that the single-phase alternating current is converted into the direct current or the direct current is converted into the alternating current; or
control second switches and third switches in the three second bridge arms to be alternately turned on, so that the three-phase alternating current is converted into the direct current.

3. The bidirectional on-board charger according to claim 2, wherein the bidirectional on-board charger comprises three fourth switches corresponding to the three second bridge arms, and a midpoint of one of the second bridge arms is connected to one live wire of the three-phase alternating current power supply or a first connection terminal of the alternating current load through a fourth switch corresponding to the second bridge arm; and
the controller is configured to:
control any one of the fourth switches to be turned on, and control the other two of the fourth switches to be turned off, so that the midpoint of the at least one of the second bridge arms receives the single-phase alternating current or outputs the alternating current; or
control the three fourth switches to be turned on, so that the midpoints of the three second bridge arms receive the three-phase alternating current.

4. The bidirectional on-board charger according to claim 3, wherein the three second bridge arms comprise the other two of the second bridge arms other than a second bridge arm corresponding to the any one of the fourth switches, and the bidirectional on-board charger comprises one fifth switch;
a midpoint of any one of the other two of the second bridge arms is connected to a first connection end of the any one of the fourth switches through the fifth switch, and the first connection end of the any one of the fourth switches is connected to one live wire of the three-phase alternating current power supply or the first connection terminal of the alternating current load; and
the controller is configured to:
control the any one of the fourth switches and the fifth switch to be turned on, and control the other two of the fourth switches to be turned off, so that the midpoint of the at least one of the second bridge arms receives the single-phase alternating current or outputs the alternating current; or
control the three fourth switches to be turned off, and control the fifth switch to be turned on, so that the midpoint of the at least one of the second bridge arms receives the single-phase alternating current or outputs the alternating current.

5. The bidirectional on-board charger according to claim 3, wherein the three second bridge arms comprise the other two of the second bridge arms other than a second bridge arm corresponding to the any one of the fourth switches, and the bidirectional on-board charger comprises two fifth switches corresponding to the other two of the second bridge arms;
a midpoint of any one of the other two of the second bridge arms is connected to a first connection end of the any one of the fourth switches through a fifth switch corresponding to the second bridge arm, and the first connection end of the any one of the fourth switches is connected to one live wire of the three-phase alternating current power supply or the first connection terminal of the alternating current load; and
the controller is configured to:
control the any one of the fourth switches and the two fifth switches to be turned on, and control the other two of the fourth switches to be turned off, so that the midpoint of the at least one of the second bridge arms receives the single-phase alternating current or outputs the alternating current; or
control the three fourth switches to be turned off, and control the two fifth switches to be turned on, so that the midpoint of the at least one of the second bridge arms receives the single-phase alternating current or outputs the alternating current.

6. The bidirectional on-board charger according to any one of claims 2 to 5, wherein the bidirectional on-board charger comprises a sixth switch, a midpoint of any one of the second bridge arms is connected to a neutral wire of the three-phase alternating current power supply through the sixth switch, and the bidirectional on-board charger is configured to charge the power battery by using the three-phase alternating current power supply; and
the controller is configured to:
control the sixth switch to be turned off.

7. The bidirectional on-board charger according to any one of claims 2 to 5, wherein the bidirectional on-board charger comprises a sixth switch, a midpoint of any one of the second bridge arms is connected to a second connection terminal of the alternating current load through the sixth switch, and the bidirectional on-board charger is configured to supply power to the alternating current load by using the power battery; and
the controller is configured to:
control the sixth switch to be turned on.

8. The bidirectional on-board charger according to claim 7, wherein the two bus capacitors comprise a positive bus capacitor and a negative bus capacitor; and
the controller is configured to:
collect a voltage of the positive bus capacitor and a voltage of the negative bus capacitor; and
when a difference between the voltage of the positive bus capacitor and the voltage of the negative bus capacitor is greater than or equal to a first threshold, control the third switch in the second bridge arm connected to the sixth switch to be turned on, so that the voltage of the positive bus capacitor and the voltage of the negative bus capacitor are balanced, wherein the difference is a value obtained by subtracting the voltage of the negative bus capacitor from the voltage of the positive bus capacitor.

9. The bidirectional on-board charger according to claim 8, wherein the controller is configured to:
when a difference between the voltage of the negative bus capacitor and the voltage of the positive bus capacitor is greater than or equal to a second threshold, control the second switch in the second bridge arm connected to the sixth switch to be turned on, so that the voltage of the positive bus capacitor and the voltage of the negative bus capacitor are balanced, wherein the difference is a value obtained by subtracting the voltage of the positive bus capacitor from the voltage of the negative bus capacitor.

10. An Vehicle power system, wherein the Vehicle power system comprises a power battery and the bidirectional on-board charger according to any one of claims 1 to 9, wherein
the bidirectional on-board charger is configured to charge the power battery by using the three-phase alternating current power supply.

11. An electric vehicle, wherein the electric vehicle comprises a power battery, a drive motor, and the bidirectional on-board charger according to any one of claims 1 to 9, wherein
the bidirectional on-board charger is configured to charge the power battery by using the three-phase alternating current power supply; and
the power battery is configured to supply power to the drive motor.
